# EUROPÄISCHE PATENTANMELDUNG

(11) **EP 1 668 981 A1**
(43) Veröffentlichungstag der Anmeldung: **14.06.2006**
(21) Anmeldenummer: 05025512.4
(22) Anmeldetag: 23.11.2005
(51) Int. Cl.: A01K 63/04, B05B 17/08

(54) **Wasserbelüfter**

(30) Priorität: 09.12.2004 DE 102004059212
(71) Anmelder: GARDENA Manufacturing GmbH, 89079 Ulm (DE)
(72) Erfinder: Renner, Thomas, 89079 Ulm (DE)

(57) **Zusammenfassung**

Für eine Wasserspielanordnung wird vorgeschlagen, unter der Wasseroberfläche einen Hohlkörper (HK) mit gasdurchlässiger Wand mit Gas unter Überdruck zu beaufschlagen, so dass durch die feinporig gasdurchlässige Wand (HW) des Hohlkörpers Gas nach außen dringt und sich in Form einer Vielzahl von Bläschen von dem Hohlkörper löst und an die Wasseroberfläche steigt und dabei einen Blasenvorhang (BV) unter Wasser erzeugt, für dessen Hervorhebung vorzugsweise eine zusätzliche Beleuchtungseinrichtung (LA) unter Wasser vorgesehen ist. Als Hohlkörper dienen vorzugsweise Schläuche (SL) mit poröser Wandung. Zur Formstabilisierung von Schlauchabgchnitten sind vorzugsweise Stützelemente (SE,BE), welche zugleich als Beschwerungselemente (BE) dienen können, in den Innenraum von Schlauchabschnitten eingelegt.

## Beschreibung

Die Erfindung betrifft eine Wasserspielanordnung sowie einen Bausatz zur Erstellung einer solchen Wasserspielanordnung.

Wasserspielanordnungen als ästhetische Elemente in Teichen oder Wasserbecken sind insbesondere bekannt in Form von Fontänen, Kaskaden, Wasserfällen und dergleichen.

Der vorliegenden Erfindung liegt die Aufgabe zugrunde, eine neue Wasserspielanordnung sowie einen Bausatz zur Erstellung einer solchen Wasserspielanordnung anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Das Erscheinungsbild der erfindungsgemäßen Wasserspielanordnung liegt primär unterhalb der Wasseroberfläche, wo die bei in dem Hohlkörper aufrecht erhaltenem Gas-Überdruck quasi kontinuierlich aufsteigenden Gasbläschen den Eindruck einer unter Wasser befindlichen, durch die getrennten Bläschen aufgelockerten Form erweckt, welche sich vom sonst einheitlich transparenten und unstrukturierten Wasservolumen deutlich abhebt und trotz der typischerweise ortsfesten Lage des Hohlkörpers durch die perlend aufsteigenden Bläschen belebt wirkt. An der Wasseroberfläche kann die Wasserspielanordnung ein je nach Intensität der Gasbläschenbildung mehr oder weniger ausgeprägtes lokales Aufsprudeln über dem Hohlkörper bewirken. Der visuelle Eindruck der Wasserspielanordnung ist besonders stark in Verbindung mit einer Beleuchtungseinrichtung, welche vorzugsweise auf die aufsteigenden Gasbläschen und/oder deren Austrittsbereiche an der Wasseroberfläche gerichtet ist. An den Bläschen erfolgt eine starke Reflexion und Streuung des Lichts, so dass sich die Bläschen deutlich vom umgebenden Wasser abheben.

Der Hohlkörper weist zur Erzeugung der Bläschen vorteilhafterweise an wenigstens einem Teil seiner Wandung ein feinporiges Material mit Öffnungsweiten der Poren vorzugsweise wesentlich kleiner als 1 mm. Die Verwendung eines feinporig porösen Materials erweist sich als vorteilhaft gegenüber einer gleichfalls möglichen Ausführung mit einer Wandung aus flächig geschlossenem Material, beispielsweise eine Gummimembran mit nachträglich eingebrachten, z. B. eingestochenen Öffnungen. Als feinporiges Material kann in vorteilhafter Ausführung ein offenporiger geschäumter Kunststoff dienen. Derartige Materialien sind an sich bekannt. Beispielsweise sind Schläuche aus einem auch für die vorliegende Erfindung geeigneten offenporigen Schaumstoffmaterial als Unterflur-Bewässerungselemente bekannt und gebräuchlich. Vorzugsweise ist der Hohlkörper materialhomogen aufgebaut.

Eine Gaseinleitung in den Hohlkörper kann vorteilhafterweise über ein separates, mit dem Hohlkörper fest oder vorzugsweise lösbar verbundenes Anschlusselement erfolgen. Vorteilhafterweise sind mehrere Hohlkörper über Verbinderelemente gasleitend miteinander verbunden, vorzugsweise lösbar verbunden. Die Verbindungselemente können vorteilhafterweise auch zugleich als Anschlussteile dienen.

Der Hohlkörper hat in vorteilhafter Ausführung eine quasi linienförmige Gestalt mit gegenüber einer Längserstreckung geringer Quererstreckung, vorzugsweise in einem Verhältnis von wenigstens 10:1. Der Hohlkörper hat in vorteilhafter Ausführung die Form eines Rohrs oder vorzugsweise eines flexiblen Schlauchs. In der bevorzugten Ausführung als Schlauch sind vorteilhafterweise zusätzlich formgebende und formstabilisierende Elemente, im folgenden als Stützelemente bezeichnet, vorgesehen, welche vorzugsweise lösbar, mit dem schlauchförmigen Hohlkörper verbunden sind und diesem eine bestimmte Form aufprägen. Die Stützelemente können an mehreren diskreten Positionen oder in Längserstreckung des schlauchförmigen Hohlkörpers, vorzugsweise über zumindest dessen überwiegende Länge mit dem Hohlkörper verbunden sein. In besonders vorteilhafter Ausführung sind die Stützelemente als langgestreckte, z. B. stab- oder rohrförmige Elemente in den Hohlkörper einschiebbar und verbleiben für den Betrieb im Hohlkörper und bestimmen dessen Form. Die eingelegten Stützelemente nehmen dabei vorteilhafterweise nur einen Teil des Innenraums des Hohlkörpers ein. Die Stützelemente weisen eine Steifigkeit auf, welche die Form des Hohlkörpers im Betrieb gleichbleibend stabilisiert, können aber dennoch in sich durch einen Benutzer mit erhöhtem Kraftaufwand manuell verformbar ausgeführt sein, so dass sie von einem Benutzer in eine gewünschte Form gebracht werden können.

Insbesondere in der bevorzugten Ausführung des Hohlkörpers als materialhomogener Schlauch aus offenporigem geschäumtem Kunststoff liegt das spezifische Gewicht des gasgefüllten Hohlkörpers unter dem von Wasser. Zur Fixierung des Hohlkörpers unter der Wasseroberfläche sind vorteilhafterweise im folgenden als Beschwerungselemente bezeichnete Körper mit höherem spezifischem Gewicht, insbesondere aus Metall, vorgesehen, welche mit dem Hohlkörper verbunden sind. Die Verbindung solcher Beschwerungselemente mit dem Hohlkörper kann an einer oder mehreren diskreten Positionen oder über einen zusammenhängenden längeren Abschnitt des Hohlkörpers erfolgen. Die Beschwerungselemente können in bevorzugter Ausführung auch in den Hohlkörper eingelegt sein. Bei Ausführung der Hohlkörper aus mineralischem und/oder metallischem.Material können Beschwerungselemente eventuell auch entbehrlich sein.

In bevorzugter Ausführung sind die Beschwerungselemente zugleich als für einen flexiblen Hohlkörper formgebende Stützelemente ausgeführt.

Als Druckgasquelle dient vorzugsweise ein motorbetriebener Luftkompressor, welcher von dem Hohlkörper beabstandet und mit diesem über eine gasleitende Verbindung, insbesondere einen flexiblen Schlauch mit gasdichter Wandung verbunden ist.

Die Wasserspielanordnung ist besonders vorteilhaft geeignet, von einem Benutzer nach eigenen Gestaltungswünschen aus einem Bausatz selbst aufgebaut zu werden. Ein solcher Bausatz enthält vorteilhafterweise wenigstens mehrere Hohlkörper der beschriebenen Art bzw. einen in mehrere Hohlkörper teilbaren Hohlkörper sowie mehrere zur gasleitenden Verbindung von Hohlkörpern unter Wasser ausgebildete Verbindungselemente, wobei in bevorzugter Ausführung ein Verbindungselement auch als Anschlusselement für eine Gaszuleitung zur Einleitung von Druckgas in wenigstens einen Hohlkörper dienen kann. Die mehreren Hohlkörper.sind vorzugsweise durch Schlauchabschnitte gegeben oder können von einem längeren Schlauch als teilbarem Hohlkörper abgeschnitten werden.

Der Bausatz enthält vorteilhafterweise ferner formstabile Stützelemente der bereits beschriebenen Art zur Formgebung für die in Form von Schlauchabschnitten vorliegenden flexiblen Hohlkörper. Die formstabilen Elemente können als im Betrieb der Wasserspielanordnung formstabil, aber durch den Benutzer mit Kraftaufwand formveränderbar sein und/oder in verschiedenen vorgegebenen Formen im Bausatz enthalten sein.

Der Bausatz enthält vorteilhafterweise mit den Hohlkörpern verbindbare Beschwerungselemente der bereits beschriebenen Art, welche, wie gleichfalls bereits beschrieben, vorzugsweise in Doppelfunktion mit den formgebenden Stützelementen identisch sein können.

Die Wasserspielanordnung kann neben dem optisch ästhetischen Effekt auch noch eine Wirkung zur Sauerstoffanreicherung in einem Teich bewirken.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Ausschnitt aus einer Wasserspielanordnung,
- Fig. 2: einen Querschnitt durch einen Hohlkörper,
- Fig. 3: eine achsiale Ansicht zu Fig. 2,
- Fig. 4: einen Bausatz für eine Wasserspielanordnung,
- Fig. 5: ein gekrümmtes Segment einer Wasserspielanordnung,
- Fig. 6: eine erste Gestaltungsform einer Wasserspielanordnung in Schrägansicht,
- Fig. 7: eine zweite Gestaltungsform einer Wasserspielanordnung in Schrägansicht,
- Fig. 8: eine dritte Gestaltungsform einer Wasserspielanordnung in Draufsicht.

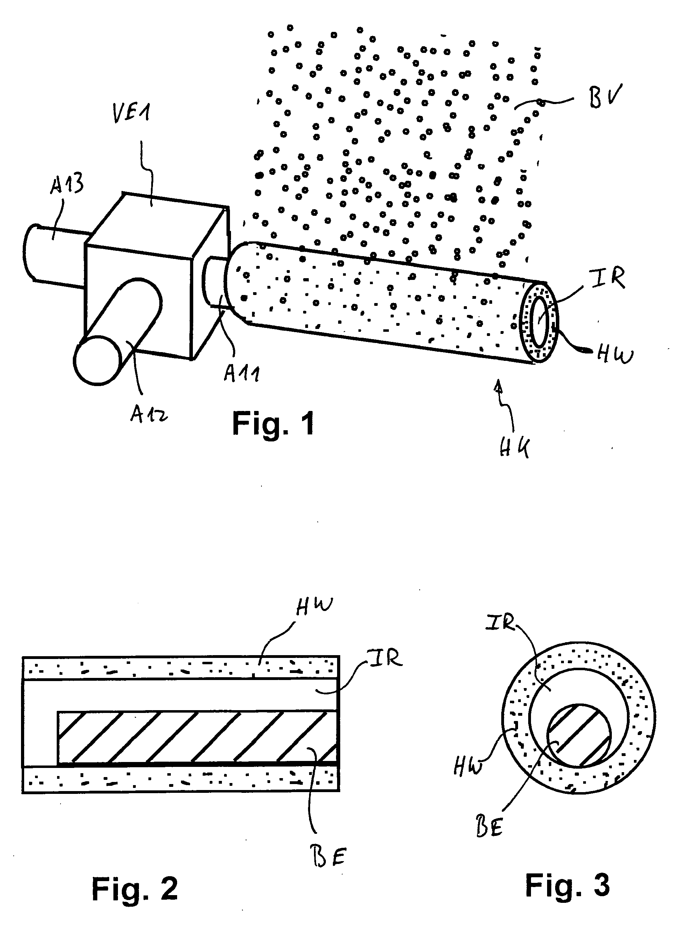

In Fig. 1 ist ein Ausschnitt aus einer erfindungsgemäßen Wasserspielanordnung skizziert, wobei an einem Verbindungselement VE1 in der Zeichnung nach rechts abgehend ein Abschnitt eines Hohlkörpers HK skizziert ist, welcher auf einem ersten Anschluss A11 des Verbindungselements VE1 befestigt ist. Das Verbindungselement ist im skizzierten Beispiel als T-Stück mit drei Anschlüssen A11, A12 und A13 ausgeführt. Beispielsweise kann an einem der weiteren Anschlussstutzen, z.B. A12, eine Druckluft-Zuleitung angeschlossen werden und an dem dritten Anschlussstutzen A13 ein weiterer Hohlkörper befestigt werden. Alle Anschlussstutzen sind innerhalb des Verbindungselements VE1 gasleitend verbunden. Es kann auch einer der Anschlussstutzen mit einem nicht weiter führenden Blindverschluss abgeschlossen sein, so dass das Verbindungselelment lediglich als Kupplungselement zwischen zwei Anschlüssen eingesetzt ist, oder das Verbindungselement VE1 kann auch bei Verschluss beider weiterer Anschlussstutzen A12 und A13 als Endstück eingesetzt sein. Unterschiedliche Ausformungen von Verbindungselementen mit zwei oder mehr Anschlussstutzen für Hohlkörper und/oder Zuleitungen können gegeben sein. Die relative Ausrichtung der mehreren Anschlussstutzen eines Verbindungselements kann verschieden gestaltet sein. Insbesondere vorteilhaft sind Ausführungsformen als gerade Durchgangsstücke mit entgegen gesetzt ausgerichteten Anschlussstutzen, Winkelstücke mit winkelversetzt gegeneinander ausgerichteten Anschlussstutzen, insbesondere mit 90° Winkelversatz, sowie Verteilerstücke mit mehr als zwei Anschlüssen wie das Element VE1 in Fig. 1 oder Kreuz-Verteilerstücke mit vier Anschlussstutzen. Details zur Befestigung eines Hohlkörpers oder einer Zuleitung auf einem Anschlussstutzen sind dem Fachmann in vielerlei Form bekannt und deshalb in Fig. 1 nicht näher ausgeführt.

Der Hohlkörper HK ist schlauchförmig ausgeführt mit einer Hohlkörperwand HW und einem von dieser umschlossenen Innenraum IR. Aus einer Druckgasquelle wird, beispielsweise über ein Verbindungselement wie VE1, Druckgas, insbesondere Druckluft in den Hohlkörper eingeleitet. Die Hohlkörperwand HW ist feinporig gasdurchlässig, so dass Gas aus dem unter Überdruck stehenden Innenraum durch die Hohlkörperwand nach außen in das umgebende Wasser eines Teiches oder Beckens austritt und dort an der Außenfläche der Hohlkörperwand HW kleine Bläschen bildet, welche sich von der Außenfläche des Hohlkörpers ablösen und nach oben an die Wasseroberfläche steigen. Je nach Überdruck im Innenraum IR und nach Porösität der Wandung HW des Hohlkörpers HK ist die Bläschenentwicklung mehr oder weniger intensiv und es bildet sich ein mehr oder weniger dichter aufsteigender Blasenvorhang BV entlang der Längserstreckung des Hohlkörpers HK. Durch zeitliche Variation des Überdrucks im Hohlkörper kann die Blasenbildung gezielt variiert werden. Dies kann z. B. durch Ein- und Ausschalten eines Drucklufterzeugers oder durch Variieren von dessen Leistung über ein steuerbares Ventil etc. erfolgen. Eine Steuereinheit hierfür kann vorteilhafterweise programmierbar sein.

Der Hohlkörper HK ist vorzugsweise materialhomogen aus einem geschäumten offenporigen Kunststoff aufgebaut, kann aber auch aus andern Materialien bestehen, beispielsweise nach Art eines Schlauches mit a priori gasundurchlässiger Wand, in welcher mit einer Perforierung in Form einer Vielzahl von feinen Löchern, beispielsweise durch Einstechen, eine für die Wasserspielanordnung weitgehend zu porösem Material äquivalente Form erzeugt ist.

Der Hohlkörper HK weist unter Einrechnung seines gasgefüllten Innenraumes IR typischerweise ein geringeres mittleres spezifisches Gewicht auf als das umgebende Wasser. Um den luftgefüllten Schlauch unterhalb der Wasserfläche zu halten, kann dieser beispielsweise am Boden eines Teiches oder Beckens verankert werden. In besonders vorteilhafter Ausführungsform sind, wie in Fig. 2 in einem Längsschnitt durch einen Schlauchabschnitt und in Fig. 3 als Ansicht in Schlauchlängsrichtung skizziert, Gewichte ein Form von Beschwerungselementen BE in den Hohlkörper eingelegt. Die Beschwerungselemente BE bestehen vorzugsweise aus Metall, insbesondere einem nicht rostenden Metall. Die Beschwerungselemente BE beanspruchen vorzugsweise im Querschnitt weniger als 50 % der Querschnittsfläche des Innenraums IR. Die Beschwerungselemente BE sind vorteilhafterweise formstabil, so dass ein Beschwerungselement zugleich als formstabilisierendes Stützelement für eine bestimmte gewünschte Form eines Abschnitts eines schlauchförmigen, an sich flexiblen Hohlkörperabschnitts dient. Beschwerungselemente und formstabilisierende Stützelemente können aber auch durch unterschiedliche Elemente, welche wiederum auch miteinander verbunden sein können, gebildet sein.

Die Erfindung ist besonders vorteilhaft dafür geeignet, dass eine Wasserspielanordnung in teilweise freier Gestaltung durch einen Benutzer selbst vorgenommen wird, insbesondere nach Art eines in erster Näherung als linienförmig betrachtbaren Grundrisses.

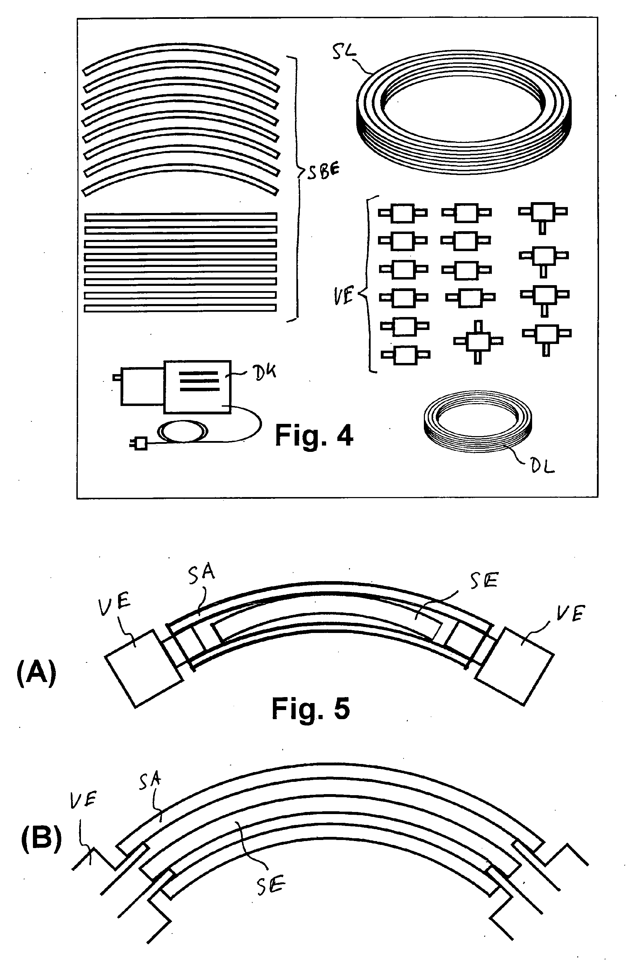

In Fig. 4 ist, ohne Beschränkung der Allgemeinheit, ein Beispiel für eine Ausstattung eines Bausatzes skizziert, welcher insbesondere enthalten kann
- einen Schlauch SL aus porösem Material, welcher als Wickelgut größerer Länge vorgegeben ist und aus welchem durch den Benutzer beliebige Abschnitte abschneidbar sind,
- ein motorisch angetriebener Kompressor DK zur Erzeugung von Druckluft,
- eine Druckluft-Verbindungsleitung DL zur Verbindung des Kompressorausgangs mit einem Anschluss einer unter Wasser befindlichen Wasserspielanordnung, wobei die Duckluftleitung im Unterschied zum Schlauch SL eine nicht gasdurchlässige Wand aufweist,
- mehrere Verbindungselemente VE, welche in verschiedener Ausführung vorliegen können. Wenn Schlauch SL und Druckluft-Zuleitung DL unterschiedliche Anschlussstutzen fordern, kann wenigstens ein gesondertes Anschlussstück oder Adapterstück vorgesehen sein. Die Verbindungselemente VE können unterschiedliche Formen besitzen. Es kann aber auch vorgesehen sein, eine einheitliche Form vorzusehen und im Einzelfall nicht benötigte Anschlussstutzen durch nicht weiterführende Blindabschlüsse zu verschließen,
- Stütz- und Beschwerungselemente SBE aus Metall in vorgegebener Form, insbesondere als gerade Abschnitte und als gebogene Abschnitte, wobei die Abschnitte unterschiedliche Längen und/oder unterschiedliche Krümmungen aufweisen können. Sofern für die Stütz- und Beschwerungselemente SBE ein relativ weiches Metall oder ein anderer, vom Benutzer selbst verformbarer Aufbau gewählt ist, können auch die Stütz- und Beschwerungselemente SBE als größere Abschnitte oder Wickelware vorliegen. Beispielsweise können Stützelemente als relativ steifer, aber vom Benutzer verformbarer Draht als Wickelware vorgegeben sein und Beschwerungselemente als auf einen solchen Draht aufschiebbare Einzelgewichte kurzer Länge bereit gestellt sein, so dass von einem Benutzer durch Kombination eines Drahtabschnitts mit aufgeschobenen Gewichten wiederum ein kombiniertes Stütz- und Beschwerungselement selbst in beliebiger Länge und Form erstellt werden kann. Die Stütz- und Beschwerungselemente sind in den Innenraum von Abschnitten des Schlauchs SL einschiebbar.

Eine Grundausstattung eines Bausatzes kann auch weniger Elemente enthalten, insbesondere beispielsweise auf einen porösen Schlauch oder Schlauchabschnitte und Verbindungselemente beschränkt sein.

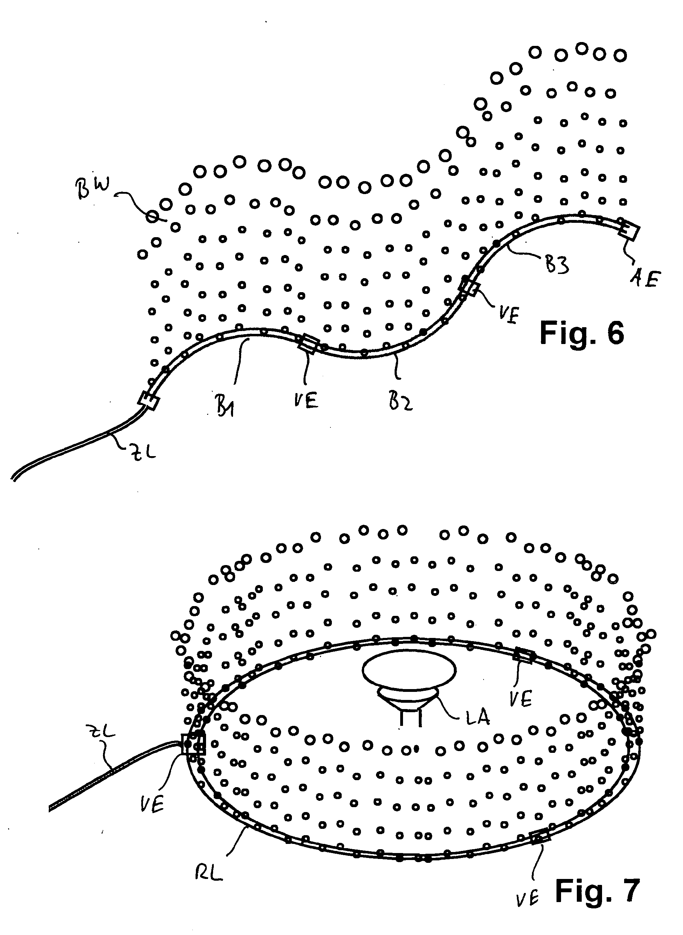

In Fig. 5 ist in zwei Beispielen ein nicht maßstäblicher Ausschnitt aus einer Wasserspielanordnung skizziert, in welcher die Formstabilisierung eines Abschnitts eines flexiblen Schlauchs durch ein gekrümmtes Stützelement im Innenraum des Schlauchabschnitts skizziert ist. Der unter der Einwirkung des unter Überdruck stehenden Gases im Innenraum und/oder aus Eigenelastizität ggf. zur Streckung in eine gerade. Form strebende Schlauchabschnitt SA ist durch Anlage an dem formstabilen Stützelement SE in einer gekrümmten Form gehalten. Das Stützelement erstreckt sich in der Ausführung nach Fig. 5 (A) vorteilhafterweise über den überwiegenden Teil der Längserstreckung des betroffenen Schlauchabschnitts. Durch an beiden Enden des Schlauchabschnitts angeschlossene Verbindungselemente VE ist das Stützelement in Längserstreckung des Schlauchs weitgehend gegen Verschiebung gesichert. In der bevorzugten Ausführung nach Fig. 5 (B) erstreckt sich das Stützelement mit seinen Enden bis in die Anschlussstutzen der Verbindungselemente VE und hält diese in einer der Krümmung des Schlauchabschnitts entsprechenden Position.

In Fig. 6 ist ein einfaches Verlegebeispiel für eine Höhlkörperanordnung mit mehreren wechselnd entgegen gerichtet gekrümmten Abschnitten B1, B2 und B3 skizziert, welche einen wellenförmigen Blasenvorhang BW erzeugen. Die Folge von Abschnitten B1, B2, B3, welche untereinander durch Verbindungselemente VE gasführend verbunden sind, ist von einer Seite über ein weiteres Verbindungselement durch einen Zuleitung ZL mit Druckluft aus beispielsweise einem Kompressor versorgt. Das der Zuleitung ZL entgegen gesetzte Ende der Folge von Schlauchabschnitten ist durch ein Verbindungselement mit abgedichteten weiteren Anschlüssen oder durch ein gesondertes Abschlusselement AE verschlossen.

In Fig. 7 ist eine Anordnung skizziert, bei welcher drei gleichmäßig gekrümmte, je einen Bogen von ca. 120° überspannende bogenförmige Segmente beispielsweise der in Fig. 5 skizzierten Art zu einem Ring RL geschlossen sind. An einem der die mehreren Segmente gasleitend verbindenden Verbindungselemente VE ist zusätzlich ein Anschluss für eine Druckluftzuleitung ZL vorgesehen. Die Wasserspielanordnung erzeugt einen Blasenvorhang RV in Form einer Zylindermantelfläche. Besonders effektvoll ist ein ringförmiger Blasenvorhang nach Fig. 7 in Verbindung mit einer im Zentrum des Vorgangs unter Wasser angeordneten, rundstrahlenden Beleuchtungseinrichtung LA, welche im wesentlichen lediglich seitlich in Richtung des Blasenvorhangs strahlt. Eine Beleuchtungseinrichtung kann auch außerhalb des Blasenvorhangs angeordnet sein. Es zeigt sich, dass vorteilhafterweise an den Blasen zwar eine auffällige Lichtstreuung und -brechung auftritt, die aber nicht mit einer starken Abschattung verbunden ist, so dass eine außerhalb des Rings befindliche Lichtquelle durch eine Schicht des Blasenvorhangs mündende, auch die gegenüberliegende Schicht ausreichend beleuchtet.

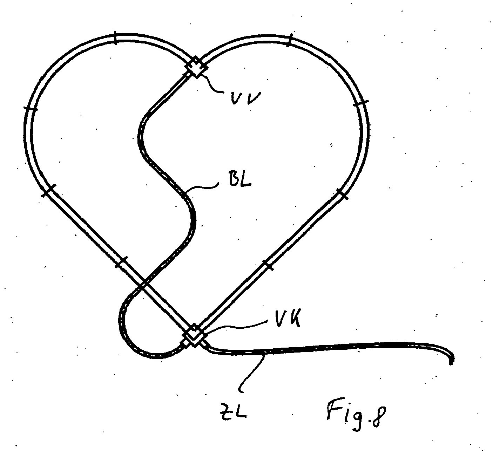

In Fig. 8 ist ein weiterer, von einem Benutzer beispielsweise mit dem Bausatz nach Fig. 4 leicht erstellbarer Grundriss HR in Herzform skizziert, bei welchem die Übergänge zwischen einzelnen Abschnitten unter Einfügung von Verbindungselementen jeweils durch Querstriche in der durch Doppellinien skizzierten Folge von Schlauchsegmenten eingezeichnet sind. Zusätzlich ist die Möglichkeit einer Mehrfacheinspeisung von Druckluft skizziert für den Fall, dass entlang der Folge von Hohlkörpersegmenten ein die Gleichmäßigkeit des Blasenvorhangs beeinträchtigender Druckverlust auftritt. Hierzu ist an der Einkerbung der Herzform ein Verbindungsstück VV mit wenigstens drei Anschlüssen nach Art des Verbindungselements VE1 in Fig. 1 benutzt, von welchem eine Bypass-Leitung BL mit nicht gasdurchlässiger Wand zu einem Kreuz-Verbindungselement VK an der Spitze der Herzform führt. Das Kreuz-Verbindungselement KV ermöglicht den Anschluss zweier Hohlkörperabschnitte, einer Druckluftzuleitung ZL und der Bypass-Leitung BL. Die Bypass-Leitung tritt, ebenso wie die Zuleitung ZL, für den Benutzer nicht auffallend in Erscheinung.

Durch eine zeitabhängig gesteuerte Speisung an verschiedenen Stellen kann der Eindruck eines fortschreitenden Blasenvorhangs erweckt werden. Durch nur kurzzeitiges Zuführen von Druckluft kann ein aufsteigender vertikaler Abschnitt, bei dem Beispiel nach Fig. 7 z. B. ein Blasenring geringer Höhe erzeugt werden. Für derartige Variationen zeitlicher und/oder örtlicher Art kann vorteilhafterweise eine vorzugsweise programmierbare elektronische Steuereinrichtung vorgesehen sein, welche zur Variation des Überdrucks z. B. den Kompressor und/oder ein oder mehrere Ventile ansteuert.

Die gegebenen Formenbeispiele sollen lediglich illustrieren, dass mit einfachen Mitteln eine große Formenvielfalt durch einen Benutzer selbst erstellt werden kann.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Wasserspielanordnung, **gekennzeichnet durch** wenigstens einen unterhalb der Wasseroberfläche angeordneten, mit Druckgas gespeisten Hohlkörper mit einer Vielzahl feiner Auslassöffnungen zum Auslass von Gas in Form von Bläschen in das umgebende Wasser, sowie **durch** eine mit dem wenigstens einen Hohlkörper gasleitend verbundene Druckgasquelle.

2. Anordnung nach Anspruch 1, **dadurch gekennzeichnet, dass** der Hohlkörper langgestreckt, insbesondere schlauch- oder rohrförmig ausgeführt ist.

3. Anordnung nach Anspruch 1 oder 2, **dadurch gekennzeichnet, dass** wenigstens ein Teil der Wandung des Hohlkörpers aus feinporigem Material besteht.

4. Anordnung nach Anspruch 3, **gekennzeichnet durch** offenporigen Schaumstoff als feinporiges Material.

5. Anordnung nach einem der Ansprüche 1 bis 4, **dadurch gekennzeichnet, dass** der Hohlkörper mit einem oder mehreren Beschwerungselementen verbunden und durch diese unter Wasser gehalten ist.

6. Anordnung nach Anspruch 5, **dadurch gekennzeichnet, dass** Beschwerungselemente innerhalb des Hohlkörpers angeordnet sind.

7. Anordnung nach einem der Ansprüche 1 bis 6, **dadurch gekennzeichnet, dass** der Hohlkörper flexibel ist und mit Stützelementen verbunden ist, welche dem Hohlkörper zumindest abschnittsweise eine im Betrieb stabile Form vorgeben.

8. Anordnung nach Anspruch 5 und 7, **dadurch gekennzeichnet, dass** das Stützelement das zugleich Beschwerungselement bildet bzw. umgekehrt.

9. Anordnung nach einem der Ansprüche 1 bis 8, **dadurch gekennzeichnet, dass** mehrere Hohlkörper durch Verbindungselemente gasleitend verbunden sind.

10. Anordnung nach einem der Ansprüche 1 bis 9, **gekennzeichnet durch** einen motorbetriebenen Luftkompressor als Druckgasquelle.

11. Anordnung nach einem der Ansprüche 1 bis 10, **dadurch gekennzeichnet, dass** eine Beleuchtungseinrichtung auf die von dem Hohlkörper aufsteigenden Bläschen gerichtet ist.

12. Bausatz zur Erstellung eines Wasserspiels, enthaltend wenigstens
a) mehrere Hohlkörper oder einen in mehrere Hohlkörper teilbaren Hohlkörper mit gasdurchlässiger Wand,
b) mehrere zur gasleitenden Verbindung von Hohlkörpern ausgebildete Verbindungselementen,

13. Bausatz nach Anspruch 12, **dadurch gekennzeichnet, dass** die Hohlkörper schlauchförmig flexibel sind.

14. Bausatz nach Anspruch 13, ferner enthaltend mit den Hohlkörpern lösbar verbindbare formstabile Stützelemente.

15. Bausatz nach einem der Ansprüche 12 bis 14, **dadurch gekennzeichnet, dass** das mittlere spezifische Gewicht des luftgefüllten Hohlkörper geringer als das spezifische Gewicht von Wasser ist und der Bausatz ferner mit dem Hohlkörper lösbar verbindbare Beschwerungselemente enthält.

16. Bausatz nach Anspruch 14 oder 15, **dadurch gekennzeichnet, dass** Stützelemente bzw. Beschwerungselemente innerhalb der Hohlkörper anordenbar sind.
